# EUROPEAN PATENT APPLICATION

(11) **EP 2 151 533 A1**
(43) Date of publication of application: **10.02.2010**
(21) Application number: 08162057.7
(22) Date of filing: 08.08.2008
(51) Int. Cl.: E04F 15/10, E04C 2/24, E04C 2/34

(54) **Floor panel, a method of producing such a floor panel and a mould for use in such a method**

(71) Applicant: Deceuninck NV, 8830 Hooglede-Gits (BE)
(72) Inventor: Marcinkowski, Jean-Marc, 59510 Forest sur Marque (FR)
(74) Representative: Mooij, Johannes Jacobus

(57) **Abstract**

The invention relates to a floor panel (1) for constructing a floor, comprising: a top layer (2), a bottom layer (3), positioned at a distance of said top layer and extending substantially parallel to said top layer, a plurality of elongated support members (6), extending between said top layer and said bottom layer and positioned in substantially parallel arrangement, wherein the minimal distance (15) between adjacent support members nearby the bottom layer is larger than the minimal distance (B) between adjacent support members nearby the top layer. The invention also relates to a method for producing such a floor panel and to a mould for us in such method.

## Description

The invention relates to a floor panel, to a method of producing such a floor panel and to a mould for use in such a method.

Constructing floors using floor panels is a common way of decorating floors of rooms and spaces in houses, and buildings, of terraces and the like. An increasing trend in constructing floors, especially in case of private houses and terraces, is to use fabricated floor panels. Such fabricated floor panels can be made of many synthetic and/or natural materials.

Prior art floor panels, especially the highly popular laminate floor panels are generally solid. There are however also hollow floor panels known which lead to a substantial saving in material. Such prior art floor panels comprise a top layer, a bottom layer, positioned at a distance from said top layer and extending substantially parallel to said top layer, and a plurality of elongated support members extending mutually parallel between said top layer and said bottom layer.

Although these floor panels are lightweight and cheap, the impact resistance of their top layer is rather limited. Locally applied impacts on the top surface may therefore lead to fracture or damage of the top layer of the floor panel.

The aim of the invention is to provide a floor panel of the kind referred to above avoiding the above described disadvantage, to a method for producing such a floor panel and to a mould for use in such a method.

This aim is reached in that the distance between adjacent support members nearby the bottom layer is larger than the distance between adjacent support members nearby the top layer. Consequently the widths of the parts of the top layer not directly supported by a support member are substantially reduced, so that locally applied forces will be more directly introduced into the support members below the top layer. As a result the stresses due to a local impact imposed on the top layer are substantially better spread and guided to the bottom layer so that the chances for fracture or deformation of the top layer are reduced.

Application of the features of the invention to a floor panel implies that the width of the support members nearby the bottom layer is smaller than the width of the support members nearby the top layer. However, as the bottom layer is supported homogenously by the supporting floor below the floor panel fracture of the bottom layer of the floor panel will be avoided despite the greater distances between the supporting elements. Thus a lightweight floor panel, requiring only little material with increased strength compared to prior art floor panels is provided.

According to a first embodiment the support members are positioned at a substantially equal average distance to each other. By positioning the support members at an equal distance to each other a stronger floor panel is provided, as the top layer is supported more homogenously. For a given width of the top layer, the average distance of non-supported portion of the top layer is decreased. As a result, the risk of loading the top layer at a non-supported portion and thus the risk of a local fracture of the top layer is thereby decreased.

In another embodiment at least one support member comprises a bifurcation, wherein a lower part of the support member extends between said bifurcation and the bottom layer and wherein at least two branches extend between said bifurcation and the top layer. Using a support member comprising a bifurcation with two branches towards the top layer leads to a more lightweight floor panel for a given strength. The two branches support the top layer at a distance from each other hence enclosing a cavity. In the event of a locally applied force at the top layer, the force will be distributed even more directly into the branches of the support members and away from the top layer through the base of the support member and the bottom layer into a supporting floor below the floor panel. Thus a floor panel is obtained with increased strength for a given weight, as the distance between supported portions of the top layer is smaller.

Preferably the branches are symmetric relative to the central plane of the support member, leading to a more optimal configuration.

Preferably the width of one of the branches is smaller than the width of the lower part of the support member. This feature provides a lightweight and still strong floor panel. Preferably, the width of each of the branches is substantially equal to the half of the width of the lower part of the support members.

In yet another embodiment the distance between the centre of the bifurcation and the top layer is substantially equal to the distance between the bifurcation and said bottom layer. Surprisingly, this configuration shows a more effective load distribution from the top layer through the branches and the lower part of the support member to the bottom layer of the floor panel. As a result the support members can be dimensioned with thinner lower parts and branches so that material is saved. However, it is also possible to provide a floor panel with a similar weight but which shows increased strength, by maintaining the thickness of the legs and the base of the support members.

Preferably the minimal distance nearby the top layer between the two branches of one support member and the two branches of two adjacent support members towards the top layer is substantially equal to the minimal distance nearby the top layer between legs extending from branches of adjacent support members towards the top layer. By thus positioning the support members a floor panel is provided with a more homogenously supported top layer. This leads to a stronger floor panel and thus to a decreased risk of fracture of the top layer due to a locally applied force. Indeed a locally applied force will be even more directly distributed into the branches of the support member nearby, leading to a decreased stress density in the top layer.

In yet another embodiment the plurality of support members are integrally formed with the top layer and the bottom layer. This feature may lead to both a cheaper and stronger floor panel. Since the support members are integrally formed with the top and bottom layer, less additional fixation means are needed, which is not only cheaper but also be stronger. In general the fixation between structures leads to local weakness of the structure, which is at least partly eliminated if the support members are integrally formed with the top layer and bottom layer.

In yet another embodiment the edges between the support members and the top and bottom layer of the panels are rounded with a radius of at least 1 mm. Preferably, the rounded angles are located at transitions between the bottom layer, the lower part of the support member, the branches, and the top layer. Rounding the support members will decrease the peak stresses, not only within the support member itself, but also at the connections of the support members with the top layer and the bottom layer. The floor panel is still lightweight and cheap, however its strength is increased. The floor panel wherein support members with rounded angles support the top layer particularly show improved performance with respect to fatigue loading. The floor panel according the invention will therefore show improved durability.

In another embodiment the floor panel comprises synthetic material and wood. This feature provides a strong, cheap and lightweight floor panel, wherein the wood may be formed by wood flour, wood fibres or other wood containing materials. The synthetic material preferably comprises plastic, such as PVC.

Preferably the floor panel has a first edge and a second edge extending parallel to the first edge, that the first edge is adapted to engage the second edge of an adjacent floor panel, that the first and the second edges of adjacent panels are adapted to enclose a gap and at least that part of the gap adjacent to the top face of the floor panel extends with both a horizontal and a vertical component. Consequently there is always a 'way down' for a liquid in the gap so that it cannot be trapped. This also counts for solid materials. Of course this can also be reached with prior art configurations of the gap extending only in a vertical direction, but the advantage of the present embodiment is that it also has an attractive appearance which is not the case with prior art gaps. Further it is noted that the upper part of the gap has a V-shape which is attractive for floors with a certain style. Herein it is noted that these features can also be applied to floor panels of other kinds than those referred to above. These features makes the floor panels especially suitable for outside terraces, as any water falling on the panels may flow away between the floor panels. The shape of the edges of the floor panels avoids that water, or possibly other liquids or debris may collect in the gap between the floor panels, which would have lead to an unsightly appearance.

Yet another embodiment provides the feature that at least a part of the first edge near the top face of the floor panel has the shape of an arrow extending to the second edge of an adjacent floor panel. This embodiment allows to transmit vertical forces between the first and second edges and hence between two adjacent panels. This embodiment combines the features of the preceding embodiment, regarding the avoidance of debris collection with the possibility to transmit vertical forces between adjacent floor panels, which is important in avoiding gaps and uneven floor surface. Further the shape of the edges of the panels allows for mutual movements between floor panels in the direction perpendicular to the edges, which is important when the panels expand or swell as caused by changing moisture content. This movement allows the panels to be mounted further from each other to allow swelling of the panels and nevertheless providing a acceptable appearance of the completed floor even with non swollen panels.

Another embodiment the first and second edges each comprise a part to be engaged by a mounting clip adapted to be mounted to a supporting element for the floor panels.

Also a method for producing a floor panel is provided, the method comprising the steps of providing a panel part adapted to cover a floor with its top layer and its bottom layer positioned at a distance of said top layer substantially parallel to the floor to be covered, a plurality of elongated support members, extending between said top layer and said bottom layer and positioned in substantially parallel arrangement, wherein the distance between adjacent support members nearby the bottom layer is larger than the distance between adjacent support members nearby the top layer is provided, the method comprising the steps of mixing wood fibres possibly wood flour and PVC, extruding the mixture thus obtained to produce the floor panel, and cutting the extrusion product into lengths. This method provides the possibility to produce floor panels according to the invention on a large scale, wherein the quality of the floor panels can be controlled due to the repeatability of the extrusion process and thus to a durable floor panel and which method still provides cheap floor panels.

For improved durability of the floor panel the quality of the floor panel needs to be sufficiently high. A mould is provided, comprising first openings for forming at least the top layer and bottom layer and second openings for forming support members and wherein a pin extends trough the second openings for forming a branch in said support member. Such a mould can be manufactured cheap, leads to floor panels with high accuracy and may show low deterioration during its use. Preferably, the mould is made from stainless steel

The invention will now be further elucidated by the following figures, without however being limited thereto and wherein:
Fig. 1 schematically represents a perspective, broken away view on a floor panel according to the invention;
Fig. 2 schematically represents a cross sectional view of a mould for producing the floor panel as depicted in figure 1; and
Fig. 3 shows a cross sectional view of a connection between two adjacent floor panels according to the invention.

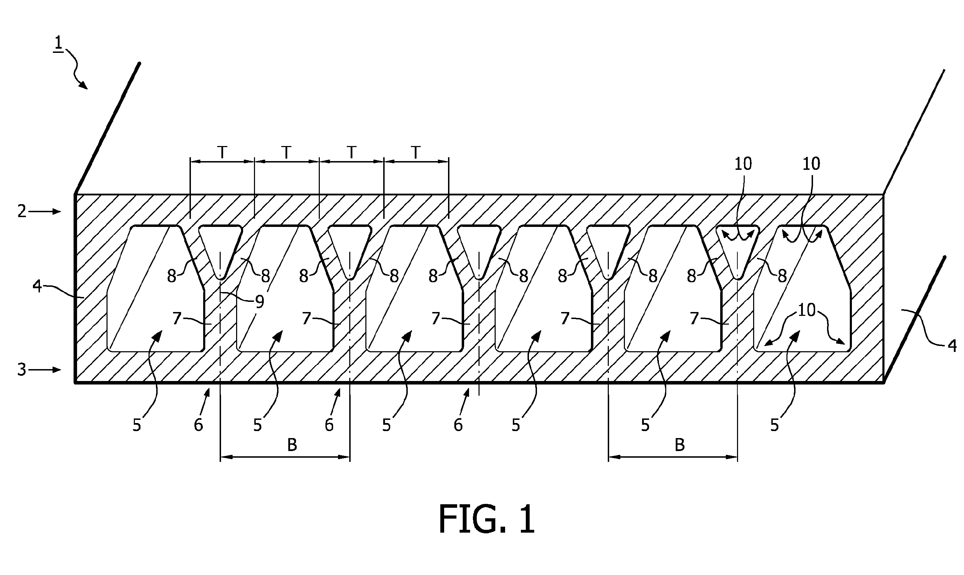

Referring to figure 1, a floor panel 1 according to the invention is shown. The floor panel 1 comprises a top layer 2 and a bottom layer 3 extending mutually substantially parallel and which are connected together by sidewalls 4 extending substantially vertical. The top layer 2, the bottom layer 3 and the sidewalls 4 enclose a space 5. Support members 6 extending substantially vertical are positioned within the space 5, which support members 6 extend between the top layer 2 and the bottom layer 3 and are positioned in parallel arrangement. The support members 6 each comprise a base 7, which extend perpendicular from the bottom layer 3 and two branches 8, which extend under a predetermined angle from the top layer 2. The base 7 and the two branches 8 of each support member 6 meet at a bifurcation 9 of the support member 6.

The top layer 2, the bottom layer 3, the sidewalls 4 and the support members 6 are integrally formed as the floor panel 1 is made by an extrusion process. The floor panel 1 is preferably made of a mixture of wood fibers and PVC.

The distance T between the centres of the branches 8 of adjacent support members 6 nearby the top layer 2 is smaller than the distance B between the centres of the bases 7 of adjacent support members 6 nearby the bottom layer 3. In prior art floor panels however the support members 6 comprise a base only extending between the top layer 2 and the bottom layer 3 of the floor panel 1. As a result the distance between the support members 6 nearby the top layer 2 of prior art floor panels has roughly the same size as the distance B of figure 1. However according to the invention the width of non-supported portions of the top layer 2 of the floor panel 1as shown in figure 1 is decreased relative to prior art floor panels due to the larger number of branches 8 supporting the top layer 2. A locally applied load will thus be more directly introduced into the support members 6 of the floor panel 1. Expressed otherwise the distance between supports is significantly reduced.

The support members 6 are spaced such that also the distance between two branches 8 from adjacent support members 6 nearby the top layer 2 is equal to the distance T between the two branches of one support member 6 nearby the top layer 2. In addition, the bifurcations 9 of the support members 6 is positioned halfway the minimal distance between the top layer 2 and the bottom layer 3.

The edges between the base 7 and the bottom layer 3 and between the branches 8 and the top layer 2 are rounded or chamfered to avoid concentration of forces and pressures and hence increase durability. The same counts for the edges between the bases 7 and the branches 8 at the bifurcations 9 and between the two branches 8 of the same support 6 at the bifurcations 9. The rounding is of course dependant on the size of the panel but it has preferably a radius larger than 0,8 mm, preferably more than 1 mm and most preferably larger than 1,5 mm.

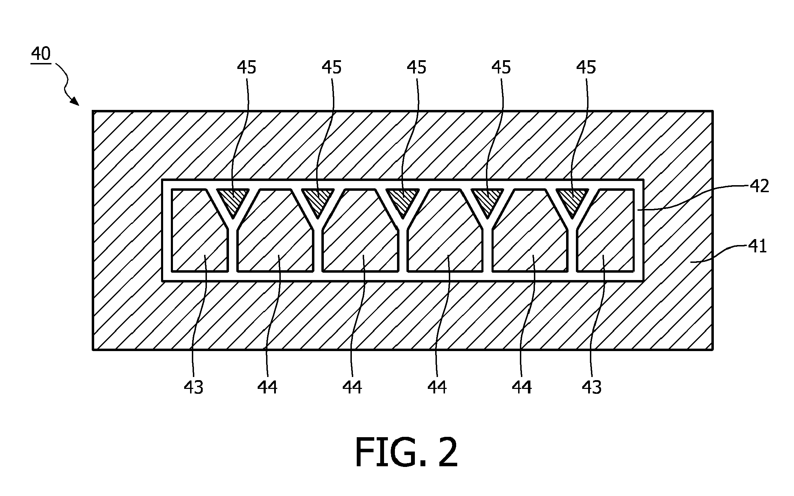

Referring now to figure 2, a cross sectional view on a mould 40 for manufacturing the floor panel according to figure 2 is shown. The mould 40 comprises a plate 41, which encloses an opening 42. Two end-pins 43, four middle-pins 44 and five top-pins 45 extend through the opening 42 and are positioned such that the filled opening 42 leaves space for manufacturing the floor panel 1 from figure 2. The plate 41 and the pins 43, 44, 45 of the mould 40 are made from stainless steel.

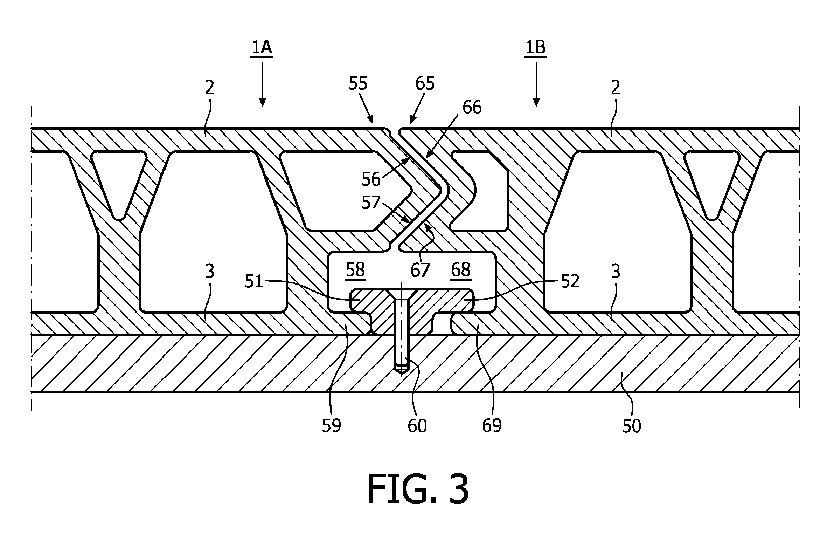

Further figure 3 shows two floor panels 1A, 1B respectively and both supported by a supporting member 50. Both panels 1A, 1B comprise a top layer 2 and a bottom layer 3. The first panel 1A comprises a first edge 55, and the second panel 1B comprises a second edge 65, adapted to engage the first edge 55 as depicted in the drawings.

Therefor the first edge 55 comprises a first outward sloping wall part 56, a second inward sloping wall part 57 and a cavity 58 located under these wall parts. On the lower side of the cavity 58 a strip 59 is provided which forms a prolongation of the bottom layer 3 and which is adapted to be engaged by a mounting clip 60. Similarly the second edge 65 comprises a first inward sloping wall part 66, a second outward sloping wall part 67 and a cavity 68 located under these wall parts. On the lower side of the cavity 68 a strip 69 is provided which forms a prolongation of the bottom wall 3 and which is adapted to be engaged by the mounting clip 60.

Herein the first outward sloping wall part 56 of the first panel 1A and the first inwards loping wall part 66 of the second panel 1B enclose a gap, while the second inward sloping wall part 57 of the first panel 1A and the second outward sloping wall part 67 of the second panel 1B also enclose a gap, both gaps having substantially the same width. This is caused by the fact that the sloping wall parts 56 and 66 extend mutually parallel and that the sloping wall parts 57 and 67 extend mutually parallel. It is however also possible that the walls extend not completely parallel, so that they have an uneven width. Both gaps have a component directed downward, so that any water or other material in the gap will flow downward via the cavity 58, 68 to the supporting floor. Further the gap allows movement between the panels in the horizontal direction to account for swelling thereof. This is important in view of the fact that these panels, due to their content of wood are prone to swelling as caused by temperature and moisture content. By initially laying the panels with a certain space between them, they may swell without exerting pressure on the walls, and nevertheless show an attractive appearance from laying. This functionality offers the possibility to lay the panels without having them adapted to the moisture and temperature in the room in which they are to be laid, leading to a saving in time.
Both panels 1A, 1B are connected to the floor 50 through a mounting clip 60, which is provided with fingers 51, 52 extending over the strips 59, 69 respectively. Herein the mounting can be such that also a certain movement of one or both panels is allowed to count for swelling or crimp of the panels.

Herein it is noted that, although figure 3 shows the features of the edges of the floor panels combined with the Y-shaped support members as depicted in figure 1, the edge configuration of figures 3 may be combined with other types of floor panels like solid floor panels or floor panels with other support members.

It will be clear that the features of the different embodiments can be combined.

## Claims

1. Floor panel for constructing a floor, comprising:
- a top layer;
- a bottom layer, positioned at a distance of said top layer and extending substantially parallel to said top layer;
- a plurality of elongated support members, extending substantially parallel between said top layer and said bottom layer,
**characterized in that** the distance between adjacent support members nearby the bottom layer is larger than the distance between adjacent support members nearby the top layer.

2. Floor panel as claimed in claim 1, **characterized in that** the average distance between adjacent support members is substantially equal.

3. Floor panel as claimed in claim 1 or 2, **characterized in that** the support members each comprises a bifurcation, a lower part extends between said bifurcation and the bottom layer and that at least two branches extend between said bifurcation and the top layer.

4. Floor panel as claimed in claim 3, **characterized in that** the branches are symmetric relative to the central plane of the support member.

5. Floor panel as claimed in claim 3, **characterized in that** the width of each of the branches is smaller than the width of the base part of the support member.

6. Floor panel as claimed in claim 3, 4 or 5, **characterized in that** the distance between the bifurcation and the top layer is substantially equal to the distance between the bifurcation and said bottom layer.

7. Floor panel as claimed in any of the claims 3-6, **characterized in that** the distance between the two branches of one support member nearby the top layer is substantially equal to the distance between branches of adjacent support members nearby the top layer.

8. Floor panel as claimed in any of the preceding claims, **characterized in that** the support members are integrally formed with the top layer and/or the bottom layer.

9. Floor panel as claimed in any of the preceding claims, **characterized in that** the angles between the support members and at least the top layer are rounded with a radius of at least 1 mm.

10. Floor panel as claimed in any of the preceding claims, **characterized in that** the floor panel comprises wood fibres and a synthetic material, like PVC.

11. Floor panel as claimed in any of the preceding claims, **characterized in that** the floor panel has a first edge and a second edge extending parallel to the first edge, that the first edge is adapted to engage the second edge of an adjacent floor panel, that the first and the second edges of adjacent panels are adapted to enclose a gap and that at least the part of the gap adjacent to the top face of the floor panel extends with both a vertical and a horizontal component.

12. Floor panel as claimed in claim 11, **characterized in that** at least a part of the first edge near the top layer has the shape of an arrow extending to the second edge of an adjacent floor panel.

13. Floor panel as claimed in claim 11 or 12, **characterized in that** the first and second edges each comprise a part to be engaged by a mounting clip adapted to be mounted to a supporting element for the floor panels.

14. Method for producing a floor panel comprising a panel part adapted to cover a floor with its top and bottom layers substantially parallel to the floor to be covered, a plurality of elongated support members, extending between said top layer and said bottom layer and positioned in substantially parallel arrangement, wherein the distance between adjacent support members nearby the bottom layer is larger than the distance between adjacent support members nearby the top layer, the method comprising the steps of
- mixing wood fibres or wood flour and PVC;
- extruding the mixture thus obtained to produce the floor panel; and
- cutting the extrusion product into lengths.

15. Mould for producing a floor panel using the method as claimed in claim 14, the mould comprises first openings for forming at least the top layer and bottom layer and second openings for forming support members, **characterized in that** a pin extends trough the second openings for forming a branch in said support member.
